# DEMANDE DE BREVET EUROPEEN

(11) **EP 1 835 311 A1**
(43) Date de publication de la demande: **19.09.2007**
(21) Numéro de dépôt: 07075151.6
(22) Date de dépôt: 26.02.2007
(51) Int. Cl.: G01V 8/20

(54) **Barrière à infrarouge actif à cellules mixtes, à la fois émettrices et réceptrices**

(30) Priorité: 16.03.2006 FR 0602310
(71) Demandeur: Société Rhodanienne D'Electronique Appliquée, 69120 Vaulx en Velin (FR)
(72) Inventeur: Bomparet, Bruno, 69007 Lyon (FR)
(74) Mandataire: Richebourg, Michel François

(57) **Abrégé**

La présente invention concerne une barrière à infrarouge actif, composée de au moins **deux colonnes rigoureusement identiques** disposées en vis à vis. La barrière à infrarouge actif possède des cellules infrarouges mixtes comprenant à la fois la fonction d'émission et de réception permettant de réaliser un multiplexage temporel par synchronisation optique. Donc chaque cellule peut émettre et recevoir un faisceau infrarouge.

## Description

### Secteur technique de l'invention :

La présente invention concerne le secteur technique des barrières à infrarouge actif d'une portée de 15 m à 200 m pour la protection périmétrique.

### Art antérieur :

On connaît les barrières à infrarouge actif, composées:
- d'un boîtier émetteur générant des rayons infrarouges invisibles (les rayons sont générés par une source de lumière infrarouge pulsée rendue directive avec un angle de plus ou moins 2° environ par l'optique de la cellule émission) ;
- d'un boîtier récepteur qui reçoit ces rayons, les analyse et détecte le passage d'un intrus entre les deux.

La cellule réception située dans le champ du cône d'émission, capte les impulsions infrarouges et les transforme en signal électrique. C'est l'absence de signal qui, après analyse par la colonne réception, déclenche l'alarme. Les barrières à infrarouge actif fonctionnent ainsi en sécurité positive:

Dans le cas de périmètres complexes à plusieurs barrières en série, cette architecture nécessite l'emploi de différentes colonnes infrarouge de configurations différentes :
- colonne simple direction émettrice ;
- colonne simple direction réceptrice ;
- colonne double direction émettrice ;
- colonne double direction réceptrice ;
- colonne mixte émettrice + réceptrice (dans ces colonnes deux types de cellules sont utilisées : cellules réceptrices et cellules émettrices. Les cellules émettrices d'une colonne sont disposées en vis à vis des cellules réceptrices de l'autre colonne et inversement).

Ceci implique une multiplication du nombre de références de produits à gérer, et à stocker. De plus, une éventuelle erreur de commande risque de rallonger les délais de réalisation du projet.

De plus, il est nécessaire de placer correctement les différentes colonnes en fonction du résultat que l'on souhaite atteindre ; une erreur de disposition entraînant un dysfonctionnement de l'ensemble du dispositif de type barrière.

Une autre difficulté des dispositifs de l'art antérieur, est de réaliser un alignement optimal entre les différentes barrières. Pour cela, les barrières à infrarouge actif nécessitent d'avoir les émetteurs et les récepteurs parfaitement alignés, c'est-à-dire qu'il faut obtenir une parfaite coïncidence des axes optiques des deux cellules émettrice et réceptrice. Cette difficulté d'alignement augmente naturellement en fonction de la distance existant entre deux cellules. La difficulté d'alignement d'une barrière infrarouge à longue portée réside non pas dans l'alignement correcte des boîtiers récepteurs, mais principalement dans celui des boîtiers émetteurs de la barrière car aucune valeur de signal n'est disponible localement.

Des systèmes de retour d'informations optique ou filaire ont été mis au point pour l'alignement correct des émetteurs, mais restent dépendants de la correcte transmission des informations codées dans le signal infrarouge ou nécessitent un câblage supplémentaire (exemple : retour d'alignement optique Optex 650 MKIII ™, retour d'alignement filaire sur Sorhea Maxiris 2000 ™).

Encore un autre inconvénient réside dans le câblage lui-même. En effet, les barrières à infrarouge actuelles délivrent leurs informations d'alarme au niveau du côté réception de la barrière. Leur câblage nécessite, notamment en ce qui concerne les informations de type alarme, soit une planification détaillée de l'emplacement et de l'orientation de chaque barrière, soit de nombreux travaux de génie civil afin de rejoindre les colonnes de réception de chaque barrière.

### Problème technique posé :

Au regard de tous les inconvénients mentionnés précédemment, il est nécessaire de mettre au point une barrière à infrarouge actif qui puisse être facilement disposée même dans le cas de périmètres complexes à protéger, tout en assurant un alignement optimal des cellules.

### Résumé de l'invention :

La présente invention concerne une barrière à infrarouge actif, composée de au moins **deux colonnes rigoureusement identiques** disposées en vis à vis et couvrant une distance de 100m au maximum pour un fonctionnement tout temps.

La principale innovation réside dans l'utilisation de nouvelles **cellules infrarouge mixtes** (incluant à la fois la fonction émettrice et réceptrice), permettant de réaliser un **multiplexage temporel par synchronisation optique.**

### Description détaillée de l'invention :

L'invention concerne donc une barrière à infrarouge actif possédant des colonnes rigoureusement identiques, à cellules infrarouges mixtes comprenant à la fois la fonction d'émission et de réception permettant de réaliser un multiplexage temporel par synchronisation optique. Donc chaque cellule peut émettre et recevoir un faisceau infrarouge.

Entre chaque couple de cellules (couple de deux colonnes) se forme donc un double balayage entrelacé de faisceaux infrarouge.

La majeure difficulté a été de réussir à synchroniser.les cycles émission /réception des deux cellules composant la barrière. Les cellules passent alternativement en mode émission puis en mode réception. Quand une cellule émet un faisceau infrarouge, la deuxième doit obligatoirement être en mode réception. Cette synchronisation s'effectue optiquement à la mise sous tension de la barrière.

Cette synchronisation optique comporte quatre canaux (fréquences) sélectionnables afin de différencier les barrières entre elles (suppression des faisceaux infrarouge parasites des autres barrières).

Le multiplexage temporel consiste à émettre les faisceaux infrarouges d'une même colonne les uns après les autres. La synchronisation optique consiste à générer un codage infrarouge permettant d'associer de façon univoque les cellules émission et réception d'une même barrière.

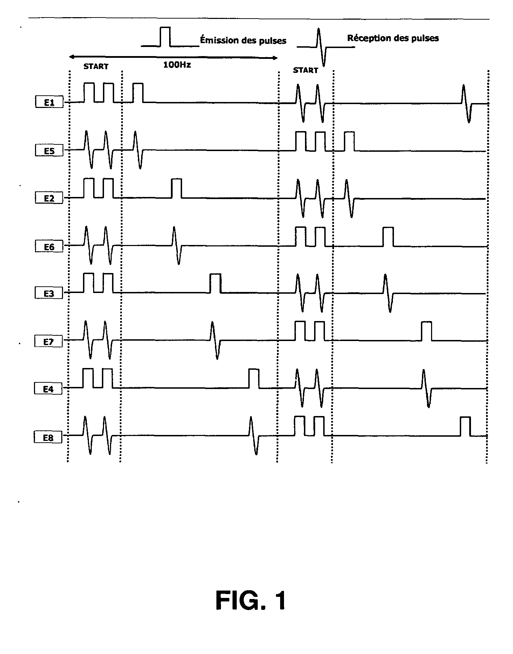

L'utilisation de cellules mixtes permet de créer un double balayage (deux multiplexages temporels) entrelacé à une fréquence de 100 Hz. La figure 1 ci-après décrit ce double balayage.

Le multiplexage temporel à synchronisation optique s'effectue comme suit
- Pendant le premier balayage (par analogie avec la vidéo on peut dire pendant la première trame) correspondant aux faisceaux 1, 2, 3, 4 les cellules de la colonne A sont émettrices et celles de la colonne B sont réceptrices.
- Pendant la deuxième trame correspondant aux faisceaux 5, 6, 7, 8 les fonctions des cellules s'inversent ; la colonne A devient réceptrice et la colonne B devient émettrice.

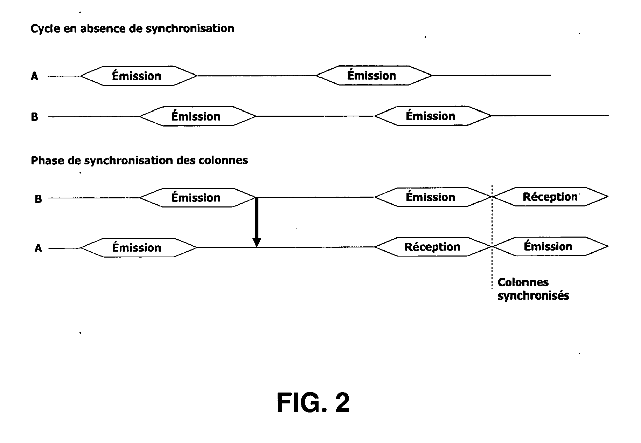

La figure 2 décrit la phase de synchronisation des deux colonnes A et B.

Un « start » (signal de départ) présent à chaque début de trame permet la réalisation de la synchronisation optique.

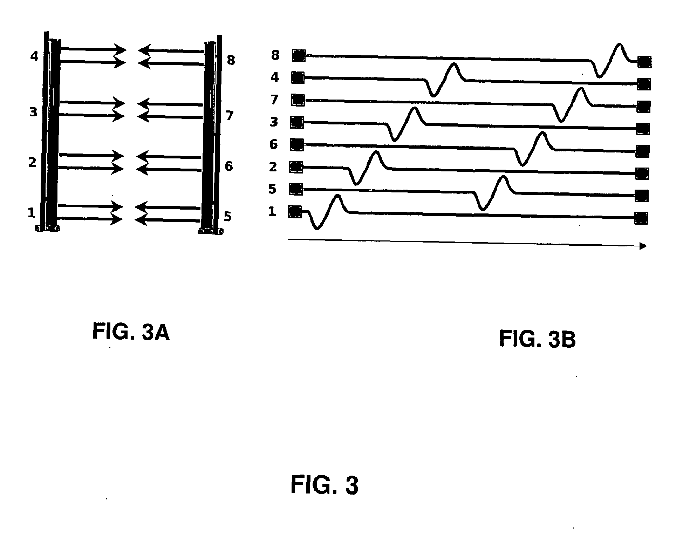

La figure 3 montre les deux colonnes A et B en fonctionnement, en dialogue mutuel.

Chaque faisceau infrarouge est multiplexé et synchronisé optiquement à une fréquence de 100 Hz.

Grâce à ce système toutes les colonnes sont identiques ce qui entraîne un gain de temps d'installation (puisque nous n'avons plus besoin de faire attention aux types de colonnes que l'on place), et limite grandement le risque d'erreurs de références.

Puisque les cellules selon la présente invention, comportent la double fonction émission / réception, on peut aligner chaque barrière simplement en utilisant la fonction réception des cellules.

De plus, des outils d'aide à l'alignement intégrés à la colonne permettent d'effectuer un alignement optimal de l'axe optique de toutes les cellules composant la barrière.

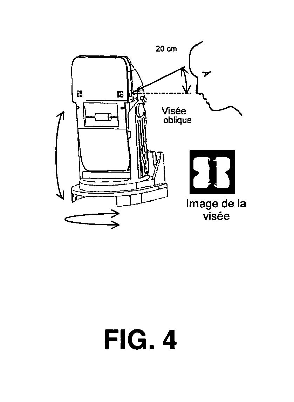

Lesdits outils d'aide à l'alignement intégrés, représentés sur le figure 4, comprennent :
- Une lunette de visée optique intégrée sur chaque cellule:
   Cette lunette permet d'effectuer un pré-alignement optique des cellules. La visée consiste à visualiser sur un miroir intégrée dans la cellule l'image de la colonne opposée. L'alignement s'effectue dans le plan vertical et horizontal par orientation directe de la cellule.
- Un puissant « Buzzer » (système émettant un signal sonore) dont le niveau sonore varie en fonction de la puissance du signal reçu ;
- Un indicateur à LED (diode électroluminescente) permettant de visualiser le niveau de signal reçu.

Ces outils permettent donc à une personne seule d'aligner les faisceaux avec une extrême précision sans devoir recourir à aucun appareil externe ce qui simplifie le montage de la barrière à infrarouge actif.

Les colonnes possèdent de préférence une hauteur comprise entre 1,10 m et 1,90 m mais peuvent naturellement être d'une hauteur adaptée à l'application voulue.

Lesdites colonnes sont notamment composées de 2, 3 ou 4 cellules par direction, d'une carte gestion par direction, et d'une alimentation 230Vac/12Vdc optionnelle par colonne.

Lesdites colonnes peuvent être en outre composées de n'importe quel type de capteur/détecteur ou autres éléments indépendants placés dans ou sur la colonne, du moment que ces éléments exploitent les contacts de sortie de la colonne selon la présente invention. Par exemple, lesdites colonnes peuvent être associées à des dispositifs de vidéo-surveillance afin d'effectuer une surveillance visuelle du périmètre à protéger.

**Les applications** de la barrière à infrarouge actif selon la présente invention concernent notamment les sites industriels, PME / PMI, collectivités, parc de stockage de voitures, entrepôts, maisons individuelles, et plus généralement tous les endroits nécessitant une protection périmètrique.

L'invention couvre également tous les modes de réalisation et toutes les applications qui seront directement accessibles à l'homme de métier à la lecture de la présente demande, et de ses connaissances propres.

## Revendications

1. Barrière à infrarouge actif composée de aux moins deux colonnes rigoureusement identiques, **caractérisée en ce que** lesdites colonnes sont composées de cellules infrarouge mixtes, c'est-à-dire des cellules capables à la fois d'émettre et de recevoir un rayon infrarouge ; ces cellules permettant de réaliser un multiplexage temporel par synchronisation optique.

2. Barrière selon la revendication 1, **caractérisée en ce que** entre chaque couple de cellules (couple de deux colonnes) il se forme un double balayage entrelacé de faisceaux infrarouges.

3. Barrière selon l'une quelconque des revendications 1 et 2, **caractérisée en ce que** la synchronisation des cycles émission / réception est réalisée par les cellules qui passent alternativement en mode émission puis en mode réception : quand une cellule émet un faisceau infrarouge, la deuxième doit obligatoirement être en mode réception.

4. Barrière selon la revendication 3, **caractérisée en ce que** cette synchronisation s'effectue optiquement à la mise sous tension de la barrière.

5. Barrière selon l'une quelconque des revendications 3 ou 4, **caractérisée en ce que** ladite synchronisation optique comporte quatre canaux (fréquences) sélectionnables afin de différencier les barrières entre elles (suppression des faisceaux infrarouge parasites des autres barrières).

6. Barrière selon l'une quelconque des revendications 1 à 5, **caractérisée en ce que** le multiplexage temporel consiste à émettre les faisceaux infrarouges d'une même colonne les uns après les autres ; la synchronisation optique consiste à générer un codage infrarouge permettant d'associer de façon univoque les cellules émission et réception d'une même barrière.

7. Barrière selon l'une quelconque des revendications 1 à 6, **caractérisée en ce que** l'utilisation de cellules mixtes permet de créer un double balayage (deux multiplexages temporels) entrelacé à une fréquence de 100 Hz, et **en ce que** chaque faisceau infrarouge est multiplexé et synchronisé optiquement à une fréquence de 100 Hz.

8. Barrière selon l'une quelconque des revendications 1 à 7 **caractérisée en ce que** le multiplexage temporel à synchronisation s'effectue comme suit:
- pendant le premier balayage (par analogie avec la vidéo on peut dire pendant la première trame) correspondant aux faisceaux 1, 2, 3, 4, les cellules de la colonne A sont émettrices et celles de la colonne B sont réceptrices;
- pendant la deuxième trame correspondant aux faisceaux 5, 6, 7, 8 les fonctions des cellules s'inversent ; la colonne A devient réceptrice et la colonne B devient émettrice ;
un « start » présent à chaque début de trame permet la réalisation de la synchronisation optique.

9. Barrière selon l'une quelconque des revendications 1 à 8, **caractérisée en ce que** ladite barrière comprend des outils d'aide à l'alignement intégrés à la colonne permettant d'effectuer un alignement optimal de l'axe optique de toutes les cellules composant la barrière.

10. Barrière selon la revendication 9, **caractérisée en ce que** lesdits outils d'aide à l'alignement intégrés, comprennent :
- Une lunette de visée optique intégrée sur chaque cellule :
cette lunette permet d'effectuer un pré-alignement optique des cellules. La visée consiste à visualiser sur un miroir intégrée dans la cellule l'image de la colonne opposée ; l'alignement s'effectue dans le plan vertical et horizontal par orientation directe de la cellule;
- Un puissant « Buzzer » dont le niveau sonore varie en fonction de la puissance du signal reçu ;
- Un indicateur à LED permettant de visualiser le niveau de signal reçu.

11. Barrière selon l'une quelconque des revendications 1 à 10, **caractérisé en ce que** les colonnes possèdent de préférence une hauteur comprise entre 1,10 m et 1,90 m mais peuvent naturellement être d'une hauteur adaptée à l'application voulue, et sont notamment composées de 2, 3 ou 4 cellules par direction ; d'une carte gestion par direction et d'une alimentation 230Vac/12Vdc optionnelle par colonne.

12. Barrière selon la revendication 11, **caractérisée en ce que** lesdites colonnes peuvent être en outre composées de n'importe quel type de capteur/détecteur ou autres éléments indépendants placés dans ou sur la colonne, du moment que ces éléments exploitent les contacts de sortie de la colonne selon la présente invention. Par exemple, lesdites colonnes peuvent être associées à des dispositifs de vidéo-surveillance afin d'effectuer une surveillance visuelle du périmètre à protéger.

13. **Applications** de la barrière à infrarouge actif selon l'une quelconque des revendications 1 à 12, pour des sites industriels, PME / PMI, collectivités, parc de stockage de voitures, entrepôts, maisons individuelles, et plus généralement tous les endroits nécessitant une protection périmètrique.
